# EUROPEAN PATENT SPECIFICATION

(11) **EP 1 671 810 B1**
(45) Date of publication and mention of the grant of the patent: **26.01.2011**
(21) Application number: 05027162.6
(22) Date of filing: 13.12.2005
(51) Int. Cl.: B60B 19/00, B60B 37/10

(54) **On-off wheel construction for panels, in particular for furniture pieces**
Radaufbau für Platten, insbesondere für Möbel
Construction de roue pour panneaux, en particulier pour meubles

(30) Priority: 14.12.2004 IT MI20042378
(43) Date of publication of application: 21.06.2006
(73) Proprietor: O.G.T.M. Officine Meccaniche S.r.l., 26866 S. Angelo Lodigiano (Lodi) (IT)
(72) Inventor: Trevini, Ruggero, 26866 S. Angelo Lodigiano (Lodi) (IT)
(74) Representative: Cicogna, Franco

(56) References cited:
- EP-A- 0 900 538
- CA-A1- 2 302 094
- JP-A- 8 254 066
- US-A- 4 874 209
- US-A- 5 765 239
- US-B1- 6 392 201

## Description

### BACKGROUND OF THE INVENTION

The present invention relates to an "on-off" wheel construction, for panels, in particular to make furniture pieces and the like.

As is conventionally known, wheel assemblies are frequently used in furniture pieces to allow the latter to be easily moved.

It is generally provided to conceal to the view the wheels and to provide said wheels with a comparatively small size, and this mainly in cases in which they must be applied to small thickness elements, such as panels.

The document US 4 874 209 discloses a rolling drawer including at least a pair of wheel assemblies.

### SUMMARY OF THE INVENTION

Accordingly, the aim of the present invention is to provide such a wheel construction which can be easily fitted to different thickness panels, and which comprises a compact and reliable locking system.

Within the scope of the above mentioned aim, a main object of the invention is to provide such a wheel construction which is structurally strong and operatively reliable.

Another object of the invention is to provide such a wheel construction which has optimum functional operating features.

According to one aspect of the present invention, the above mentioned aim and objects, as well as yet other objects, are achieved by a wheel construction according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

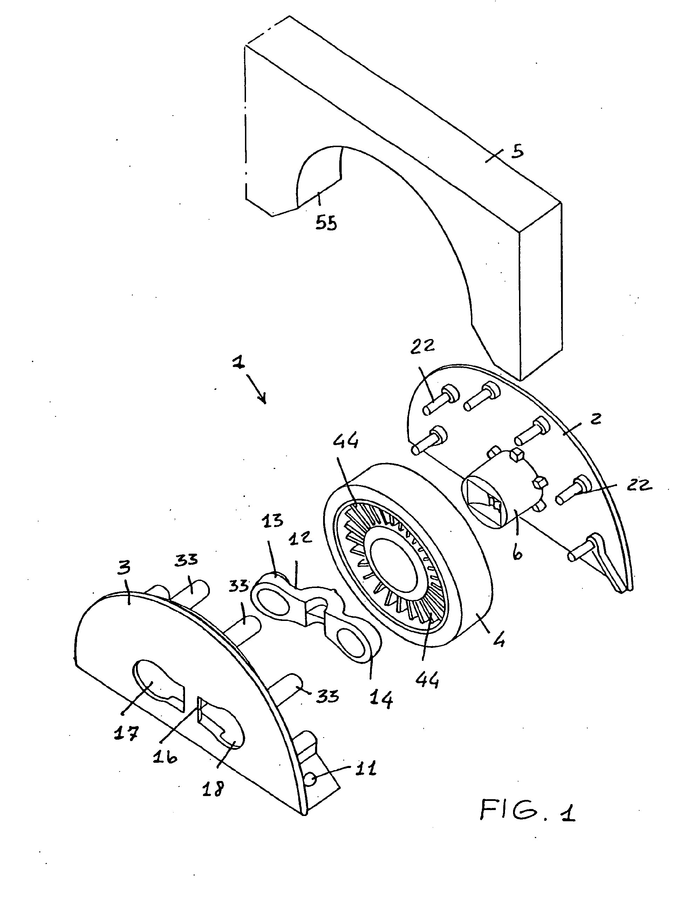

Figure 1 is an exploded perspective view of the wheel construction according to the invention;

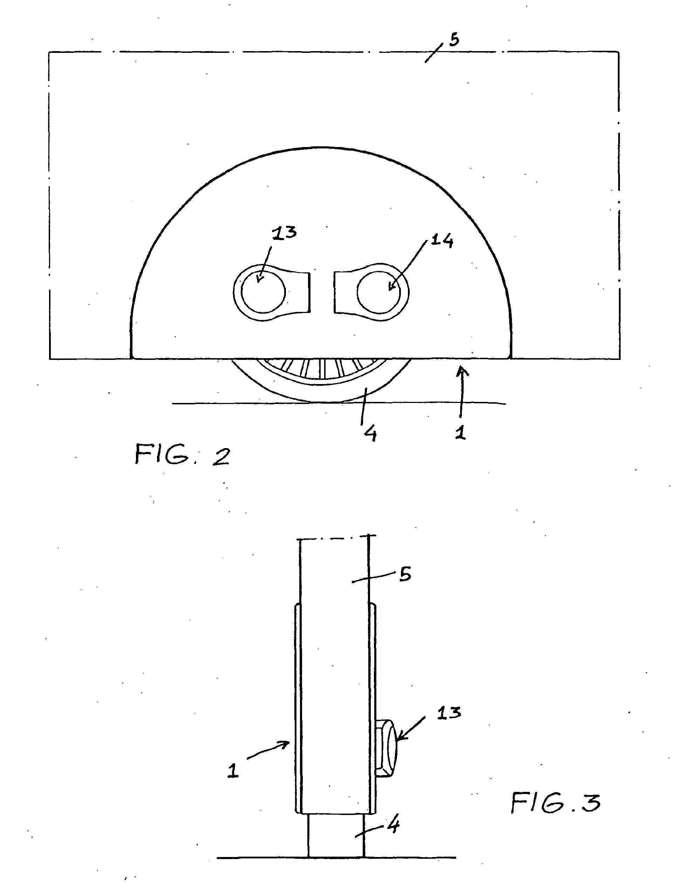

Figure 2 is a side elevation view showing the wheel construction according to the invention, applied to a panel;
Figure 3 is a front view of the wheel construction shown in figure 2;
Figure 4 is a side elevation view, as longitudinally cross-sectioned, of the wheel construction according to the invention, applied to the panel;
Figure 5. is a top plan view, as cross-sectioned, of the wheel construction shown in figure 4, and being illustrated in a free-wheel type of position; and

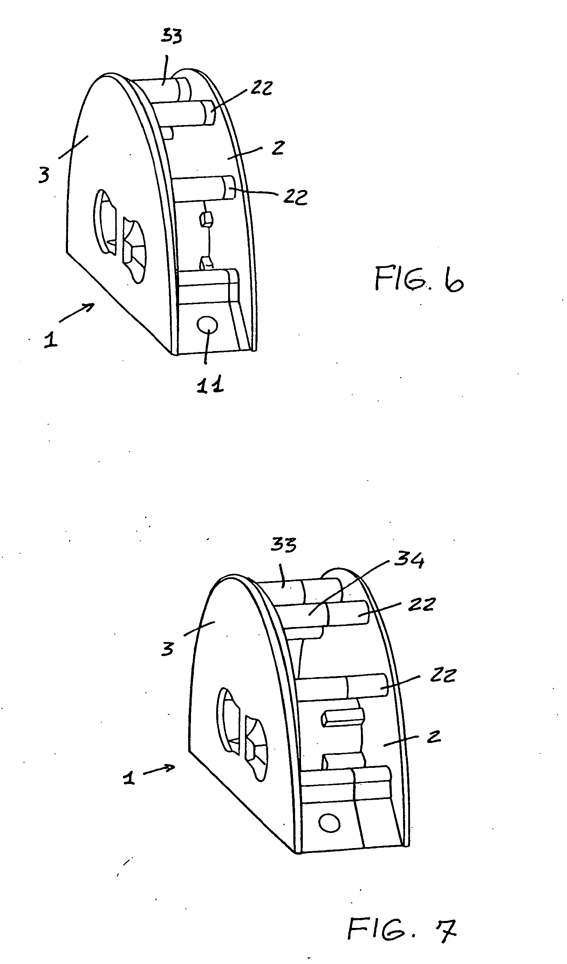

Figures 6 and 7 are perspective view showing the wheel construction in two embodiments of different thicknesses.

### DESCRIPTION OF THE PREFERRED EMBODIMENT

With reference to the number references of the above mentioned figures, the wheel construction, according to the present invention, generally indicated by the reference number 1, comprises a bottom plate 2, including a plurality of pegs 22 and to which a cover 3 including counter-pegs 33, can be applied to form a framework suitable to hold therein a wheel element 4.

According to the invention, the bottom plate 2 has a variable thickness, so as to form a variable thickness framework, which can be fitted to the thickness of the panel 5 to which the wheel construction 1 is applied.

In this connection it should be pointed out that the above mentioned pegs 22 have a suitably tapering configuration and engaged in axially extending cavities, formed in the corresponding counterpeg elements 33.

Thus, it is possible to quickly and easily assembling the wheel construction according to the invention.

The base plate 2 comprises a wheel pin 6, formed as a cantilevered single piece, to support the wheel 4.

The connection to the panel 5 of the framework formed by the above mentioned bottom plate 2 and cover 3, is achieved by engaging the framework in a semicircular recess 55 formed in said panel 5 and by locking said framework by a locking screw threaded to the panel 5 and engaging a hole 11 formed in the cover 3.

The wheel construction according to the invention comprises moreover a locking device for preventing the wheel 4 from turning, said locking device including a locking lever 12 having an engagement portion 13, adapted to interfere against the wheel 4 to prevent the latter from turning, and an operating or driving portion 14 which can be controlled or driven from the outside, to displace the lever 12 from its detent position to the "free wheel" position and vice versa.

More specifically, said lever 12 comprises a central recess 15 in which is engaged an upright 16, separating a first opening 17 from a second opening 18 formed in the cover 3.

The engagement portion 13 comprises a plurality of tooth elements 113 designed for interfering against partially extending legs 44 of the wheel 4, as said lever 12 is arranged in the locking position thereof.

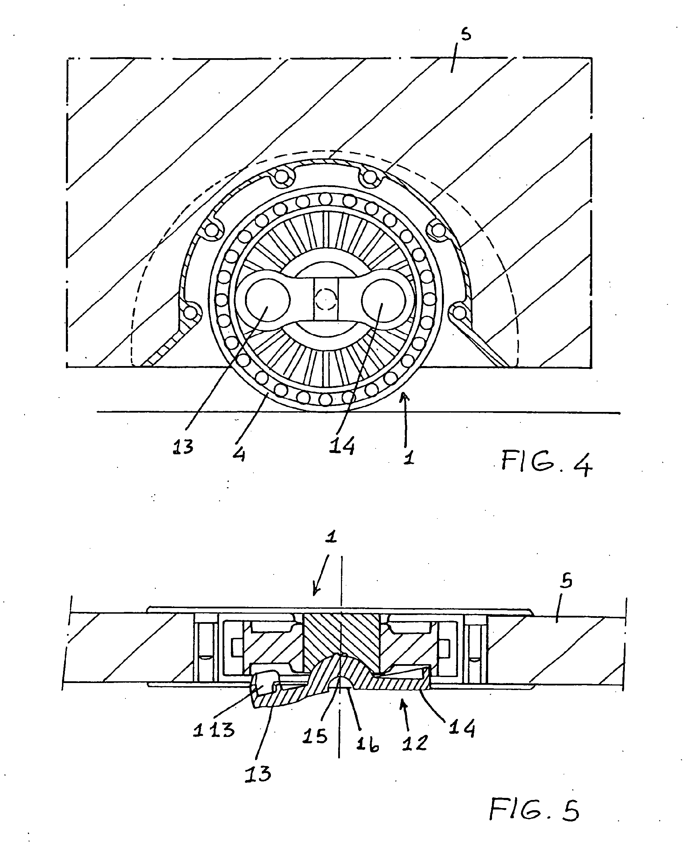

As the locking device is in its free-wheel or idle position, as shown in figure 5, it is sufficient to press on the engagement portion 13 to cause said lever to turn, thereby the tooth elements 113 will engage the radially extending fins or legs 44 of the wheel 4, to lock the latter.

To achieve again a free-wheel or idle condition, it will be sufficient to press on the driving portion 14, to displace the lever 12 again to the position shown in figure 5, which, as stated is a "free-wheel" position or idle position.

It has been found that the invention fully achieves the intended aim and objects.

In fact, the invention provides a wheel construction including a locking device having a very small size.

Moreover, the wheel construction can be easily fitted to a plurality of panels having different thicknesses, since the cross size of the framework can be easily changed by applying a suitable and variable thickness bottom plate 2, including the mentioned pegs 22.

In fact, the modular structure of the wheel construction according to the invention allows to provide different thickness wheels, while holding unaltered all the basic or main components and changing only the thickness of the bottom plate 2.

Furthermore, the very simply constructed locking device, provides a wheel of very reliable operation.

In practicing the invention, the used materials, as well as the contingent size and shapes, can be any, depending on requirements.

## Claims

1. A wheel construction for application to different thickness panels (5) of furniture pieces, **characterized in that** said wheel construction comprises a bottom plate (2), a cover (3) adapted to be applied to said bottom plate (2) to form a framework suitable to hold therein a wheel (4), said bottom plate, being made with different cross dimensions to vary the thickness of said framework, comprising a plurality of pegs (22) engageable in respective counter-pegs (33) formed on said cover, to form said framework, and a lever locking device for preventing said wheel (4) from turning, said locking device comprising a locking lever (12) having an engagement portion (13) for engagement with said wheel (4) for preventing said wheel (4) from turning, and a driving portion (14) which can be so driven from the outside to cause said lever (12) to be displaced from a detent position to a free-wheel position thereof, and vice-versa.

2. A wheel construction, according to claim 1, **characterized in that** said pegs (22) have a tapering configuration and engage in axial cavities formed in said counter-pegs (33).

3. A wheel construction, according to claim 1, **characterized in that** said bottom plate (2) comprises a wheel pin (6) formed as a cantilevered single piece to support said wheel (4).

4. A wheel construction, according to claim 1, **characterized in that** said wheel (4) is clamped to said framework, formed by said bottom plate (2) and cover (3), by engaging said framework in a semicircular recess (55) formed in said panel (5) and by locking said framework by a locking screw threaded to said panel (5) and engaging in a hole (11) formed in said cover (3).

5. A wheel construction, according to one or more of the preceding claims, **characterized in that** said lever (12) comprises a central recess (15) in which is engaged a separating upright (16) separating a first opening (17) from a second opening (18) formed in said cover (3).

6. A wheel construction, according to claim 1, **characterized in that** said engagement portion (13) of said lever (12) comprises a plurality of tooth elements (113) adapted to interfere against radially extending legs (44) of said wheel (4), as said lever (12) is arranged at a locking position thereof.

7. A wheel construction, according to claim 6, **characterized in that**, as said locking device is in a free-wheel or idle position thereof, the engagement of said tooth elements (113) with said radially extending legs (44) of said wheel (4), to lock said wheel, is performed by pressing said engagement portion (13) of said lever (12) to cause said lever (12) to turn.

8. A wheel construction, according to claim 1, **characterized in that** said wheel (4) can be fitted to different thickness panels (5), by changing the cross dimensions of said framework and wheel (4) only by changing the thickness of said bottom plate (2), while holding all the other components of said wheel construction unaltered.

## Patentansprüche

1. Radaufbau zur Anwendung auf Platten (5) mit unterschiedlicher Dicke von Möbelstücken, **dadurch gekennzeichnet, dass** der Radaufbau eine Bodenplatte (2); eine Abdeckung (3), die dazu geeignet ist, an der Bodenplatte (2) angebracht zu werden, damit ein Rahmen gebildet wird, der dazu geeignet ist, darin ein Rad (4) zu halten, wobei die Bodenplatte, die mit unterschiedlichen Querabmessungen ausgeführt ist, um die Dicke des Rahmens zu verändern, mehrere Stifte (22) umfasst, die in jeweiligen Gegenstiften (33), welche an der Abdeckung ausgebildet sind, in Eingriff gebracht werden können, um den Rahmen zu bilden; und eine Hebelsperrvorrichtung, um zu verhindern, dass sich das Rad (4) dreht, umfasst; wobei die Sperrvorrichtung einen Sperrhebel (12) mit einem Eingreifabschnitt (13) zum Eingriff mit dem Rad (4), um das Rad (4) an einem Drehen zu hindern; und einen Antriebsabschnitt (14), der von außen her so angetrieben werden kann, dass ein Verschieben des Hebels (12) von seiner Arretierstellung in seine Freilaufstellung und umgekehrt verursacht wird, umfasst.

2. Radaufbau nach Anspruch 1, **dadurch gekennzeichnet, dass** die Stifte (22) eine sich verjüngende Gestaltung aufweisen und in axialen Aushöhlungen, die in den Gegenstiften (33) gebildet sind, eingreifen.

3. Radaufbau nach Anspruch 1, **dadurch gekennzeichnet, dass** die Bodenplatte (2) einen Radbolzen (6) aufweist, der als freitragendes einzelnes Stück ausgeführt ist, um das Rad (4) zu halten.

4. Radaufbau nach Anspruch 1, **dadurch gekennzeichnet, dass** das Rad (4) an den durch die Bodenplatte (2) und die Abdeckung (3) gebildeten Rahmen geklemmt ist, indem der Rahmen in einer halbkreisförmigen Aussparung (55), die in der Platte (5) gebildet ist, in Eingriff gebracht ist und der Rahmen durch eine Sperrschraube, die an die Platte (5) geschraubt ist und in einem in der Abdeckung (3) gebildeten Loch (11) eingreift, gesperrt ist.

5. Radaufbau nach einem oder mehreren der vorhergehenden Ansprüche, **dadurch gekennzeichnet, dass** der Hebel (12) eine mittlere Aussparung (15) umfasst, in der eine trennende Säule (16) in Eingriff gebracht ist, die eine erste Öffnung (17) von einer in der Abdeckung (3) gebildeten zweiten Öffnung (18) trennt.

6. Radaufbau nach Anspruch 1, **dadurch gekennzeichnet, dass** der Eingreifabschnitt (13) des Hebels (12) mehrere Zahnelemente (113) umfasst, die dazu geeignet sind, mit sich radial erstreckenden Schäften (44) des Rades (4) einzugreifen, wenn der Hebel (12) in seiner Sperrstellung angeordnet ist.

7. Radaufbau nach Anspruch 6, **dadurch gekennzeichnet, dass** der Eingriff der Zahnelemente (113) mit den sich radial erstreckenden Schäften (44) des Rades (4), um das Rad zu sperren, dann, wenn sich die Sperrvorrichtung in ihrer Freilauf- oder Leerlaufstellung befindet, durch Pressen des Eingreifabschnitts (13) des Hebels (12), um eine Drehung des Hebels (12) zu verursachen, durchgeführt wird.

8. Radaufbau nach Anspruch 1, **dadurch gekennzeichnet, dass** das Rad (4) durch Verändern der Querabmessungen des Rahmens und des Rades (4) nur durch Verändern der Dicke der Bodenplatte (2), während alle anderen Bestandteile des Radaufbaus unverändert belassen werden, an Platten (5) mit unterschiedlicher Dicke angebracht werden kann.

## Revendications

1. Construction de roue destinée à une application sur des panneaux de différentes épaisseurs (5) de meubles, **caractérisée en ce que** ladite construction de roue comprend une plaque de fond (2), un couvercle (3) conçu pour être appliqué sur ladite plaque de fond (2) pour constituer un bâti adapté pour y contenir une roue (4), ladite plaque de fond (2) étant fabriquée avec des sections droites de différentes dimensions pour faire varier l'épaisseur dudit bâti, comprenant une pluralité de fiches (22) qui peuvent s'engager dans des contre-fiches (33) respectives prévues sur ledit couvercle, pour former ledit bâti, et un dispositif de blocage de levier destiné à empêcher ladite roue (4) de tourner, ledit dispositif de blocage comprenant un levier de blocage (12) ayant une partie d'engagement (13) destinée à s'engager sur ladite roue (4) afin d'empêcher ladite roue (4) de tourner, et une partie d'entraînement (14) qui peut être entraînée depuis l'extérieur de sorte à provoquer le déplacement dudit levier (12) d'une position de verrouillage à une position de roue libre, et vice-versa.

2. Construction de roue selon la revendication 1, **caractérisée en ce que** lesdites fiches (22) ont une configuration de cône et s'engagent dans des cavités axiales pratiquées dans lesdites contre-fiches (33).

3. Construction de roue selon la revendication 1, **caractérisée en ce que** ladite plaque de fond (2) comprend un pivot de roue (6) ayant la forme d'une pièce unique en porte à faux destinée à supporter ladite roue (4).

4. Construction de roue selon la revendication 1, **caractérisée en ce que** ladite roue (4) est encastrée dans ledit bâti constitué par ladite plaque de fond (2) et ledit couvercle (3), en engageant ledit bâti dans un évidement semi-circulaire (55) formé dans ledit panneau (5) et en bloquant ledit bâti grâce à une vis de blocage vissée dans ledit panneau (5) et en s'engageant dans un trou (11) pratiqué dans ledit couvercle (3).

5. Construction de roue selon l'une ou plusieurs des revendications précédentes, **caractérisée en ce que** ledit levier (12) comprend un évidement central (15) dans lequel s'engage un montant de séparation (16) séparant une première ouverture (17) d'une seconde ouverture (18) pratiquées dans ledit couvercle (3).

6. Construction de roue selon la revendication 1, **caractérisée en ce que** ladite partie d'engagement (13) dudit levier (12) comprend une pluralité d'éléments dentés (113) conçus pour interférer contre des tiges qui s'étendent radialement (44) de ladite roue (4), alors que ledit levier (12) est agencé dans une position de blocage de celle-ci.

7. Construction de roue selon la revendication 6, **caractérisée en ce que**, alors que ledit dispositif de blocage se trouve dans une position de roue libre, l'engagement desdits éléments dentés (113) sur lesdites tiges qui s'étendent radialement (44) de ladite roue (4), pour bloquer ladite roue, est réalisé en appuyant sur ladite partie d'engagement (13) dudit levier (12) pour provoquer la rotation dudit levier (12).

8. Construction de roue selon la revendication 1, **caractérisée en ce que** ladite roue (4) peut être fixée sur des panneaux de différentes épaisseurs (5), en changeant la section droite dudit bâti et de la roue (4), en changeant uniquement l'épaisseur de ladite plaque de fond (2) tout en conservant tous les autres composants de ladite construction de roue inchangés.
